# EUROPEAN PATENT APPLICATION

(11) **EP 3 363 877 A1**
(43) Date of publication of application: **22.08.2018**
(21) Application number: 17180627.6
(22) Date of filing: 11.07.2017
(51) Int. Cl.: C10B 49/08, C10J 3/48, C10K 1/32, C10J 3/62

(54) **DUPLEX PROCESS FOR RAPID THERMOCHEMICAL CONVERSION OF CARBONACEOUS RAW MATERIALS**

(30) Priority: 21.02.2017 US 201762461242 P
(71) Applicant: Lurii, Valerii, 125315 Moscow (RU); Zerkalov, Georgy, San Jose, CA 95134 (US)
(72) Inventor: Lurii, Valerii, 125315 Moscow (RU); Zerkalov, Georgy, San Jose, CA 95134 (US)
(74) Representative: Evens, Paul Jonathan

(57) **Abstract**

The invention belongs to processes of converting carbonaceous raw materials to produce gaseous, solid, and liquid energy carriers and can be used in municipal, agriculture, wood processing industry, in the mining and petrochemical industries and other industries for thermochemical conversion of carbon-containing wastes from these industries to produce combustible gas, solid and liquid fuels, sorbents and other products. The process provides for the use of a vortex gasifier to produce hot generator gas, used as a heat carrier for the process of pyrolysis of raw material in the reactor, in which char and vapor gas are produced as a result of thermochemical reaction, a purification device to treat produced in the reactor vapor gas, and an apparatus for separation of vapor gas into different components. During the operation of the pyrolysis reactor, hot generator gas is fed into the upper part of the reactor and then proceeds to the bottom of the reactor through a gas duct inside the pyrolysis reactor until it reaches the distributor, through which it exits and travels up to the exit of the reactor, with simultaneous feed of raw material into the upper part of the reactor and movement of raw materials down the sloping mesh shelves. Effective thermochemical conversion of raw material is achieved in the countercurrent of raw material and heat carrier. The vapor gas formed in the pyrolysis reactor is supplied to the purification and separation units, while the char descends into the hopper from which it is released by a screw conveyor and/or sluice feeder to be sent to consumers or to the gasifier to obtain the heat carrier.

## Description

The invention relates to processing carbonaceous raw materials and can be used in municipal, agriculture, wood processing, mining and petrochemical industries for thermochemical conversion of carbon-containing materials and wastes from these industries to produce combustible gas, solid and liquid fuels, sorbents and other products.

Numerous methods have been developed to process carbonaceous feedstock and convert it into fuels, sorbents and other products. Carbonaceous raw materials may be burned to obtain heat. This method has relatively low efficiency and is associated with large amounts of harmful emissions in flue gases. Fermentation process may be used to process some carbonaceous materials to produce bio-gas. Nonetheless, such feedstock as coal slurry, plastics, and textile may not be processed using this method. At the same time, the process requires large quantities of water and relatively large fermentation reactors. The process of fermentation is slow and the coefficient of energy extraction is low. Pyrolysis may be used to convert different types of carbonaceous feedstock into combustible gas, liquid fuels and char. Nonetheless, the products should be processed and refined prior to shipment to customers, and that increases capital and maintenance costs. Gasification is a universal process, which may be used for any type of carbonaceous feedstock. Nonetheless, the gasification methods and equipment vary based on the type of feedstock. Several methods of thermal conversion of carbonaceous raw materials into valuable products have been analyzed and limitations of these methods have been pointed out.

The known installation (patent: RU 2182684, F23G5/027, F23G7/00) for processing organic raw materials to obtain fuel components has been analyzed. It comprises means for dosage loading of raw materials into a pyrolysis reactor, containing annular combustion chamber located at the bottom of the reactor around its reaction chamber and equipped with tangential inlets for fuel components, an igniting burner to combust input fuel components, and a radial output, located on the perimeter of the reaction chamber of the thermochemical reactor for pyrolysis. The vapor gas outlet of the reactor is connected to the separation system for vapor gas mixture. The separation system contains consecutively set and connected cyclones, a catalyst packing, a condenser, a mass transfer column, an active centrifugal cyclone, a centrifugal fan, and a vane controller. The condenser is connected to a condensate collector through a cooler. The mass transfer column is connected to the fuel liquid collector through a cooler as well. The centrifugal active cyclone is connected to the fuel liquid collector. The vane controller is connected with the annular combustion chamber and the heat generator, which is connected to a dryer with one of its outputs and to an exhaustion pipe, through a fan, with another. A sluice feeder is used to discharge solid residue from the reactor. It has a box-like body, inside which there are upper and lower plates with two holes and a rectangular block containing a cylindrical chamber in the middle portion and mounted to allow reciprocating movement between the top and the bottom plates. The top plate is connected with the bottom of the reactor through the first cylindrical hole and with the steam chamber through the second hole. The steam chamber contains a sprinkler and a cap to which an outlet for removing vapor is attached. The lower plate is connected to the damping chamber through the second hole.

Analyzing known installation, it should been noted that during its operation a part of produced pyrolysis gas is used to generate heat for the reactor, which reduces yield of useful products. In addition, the produced fuel components - fuel liquid, carbonaceous residue and pyrolysis gas - have low qualities. The produced fuel liquid is a single fraction viscous pyrolysis oil with high concentration of oxygen-containing compounds (phenols, acids, alcohols). Its properties significantly differ from those of conventionally used hydrocarbon fuels. The solid carbonaceous residue contains unconverted organic raw materials, while the pyrolysis gas has low energy density with low content of combustible components and requires significant purification for further use.

Another known installation (patent: US7452392B2) and process for producing a combustible gaseous product from heterogeneous organic feedstock in the form of municipal waste and other consumer wastes or mixtures thereof has been analyzed. The installation comprises a moving bed reactor with a vertical shaft, where raw material is fed from above and, under its own weight, descends downwards. The reaction chamber is located in the lower part of the reactor shaft. A zone for collection and discharge of slag is located below the reaction chamber in the shaft of the reactor. At the same time, the installation comprises a burner which utilizes a portion of the product gas recycled in the reactor or purchased gas under oxygen deprived conditions. From the burner, the hot fuel gas is fed into the reaction chamber of the reactor along with supplied water vapor. The hot gas and steam in the reaction chamber and directly above it help convert loaded solid raw materials to product gas that passes through the overlying layer of raw material and leaves the upper part of the reactor. Part of the product gas is recycled while the rest is sent to separation and purification.

Analyzing the known installation, it should been noted that in case of using part of the recycled product gas in the burner, the yield of the product decreases. In the case of using purchased gas in the burner, the costs for the production of the product increase. Descending raw materials, for instance, municipal wastes, in the reactor shaft under the influence of gravity, containing low-melting elements and passing through a certain temperature zone (180-280°C) form a gas-tight plug comprising solid particles of melt-bonded low-melting elements. This leads to an emergency shutdown of the reactor. At the same time, it has been shown in practice using layer reactors that the use of special irregularly sized and shaped post-consumer waste material or varying the driver gas inlet pressure within the permissible limits, does not allow to prevent these accidents.

Another known installation (patent: RU 2275416, C10L5/48, F23G5/027) for processing organic raw materials to obtain fuel components has been analyzed. It comprises a reactor, equipped with devices for loading heated raw materials deprived of oxygen and discharging solid components after their thermochemical processing, mounted respectively in the top and bottom of the reactor, and an outlet located in the upper part of the reactor for removing vapor gas components of raw materials. The reactor is equipped with at least two annular collectors to inject gaseous heat carrier into its workspace. The heat carrier is produced by a device located outside of the reactor. The vapor gas outlet of the reactor is linked with the vapor gas separation system, which is designed as a number of consecutively connected separating apparatuses to obtain different fractions of liquid hydrocarbons from the vapor gas. Each of the separation apparatuses is connected to the storage tank with one its outputs. The last of consecutively connected separating apparatuses is connected - through a heat exchanger - to a separator, providing separation of the vapor gas residue into liquid and gaseous phases. The liquid phase is used as fuel to obtain heat carrier, while the gas phase is sent to the input of the collectors for the reactor.

Analyzing the known installation, it should be noted that the need to warm up a feedstock batch and remove oxygen from it results in periodic feed process, which reduces productivity of the installation as compared to continuous feed process. The resulting cyclic operation of the reactor also deteriorates product quality. The presence of solid phase in the vapor gas phase obtained in the reactor also reduces the quality of products obtained during separation. Furthermore, the use of produced fuel liquid and fuel gas in the heat carrier production device reduces the yield of finished products.

The objective of the present invention is to provide a highly efficient process for rapid thermochemical conversion of carbonaceous raw materials into valuable products and energy carriers.

The invention is a set of equipment and a process which, while maintaining continuous, high-performance processing of raw materials, provides one with high quality products. This is achieved by optimizing operation conditions of thermochemical treatment of raw materials in the reactor, removing solid particles from obtained vapor gas phase before it is fed into the separation apparatus, and by using a duplex system, comprising a vortex gasifier and a pyrolysis reactor.

The invented process to convert carbonaceous raw material uses a thermochemical reactor for pyrolysis of raw materials, devices for loading raw material and technological additives into the upper part of the reactor, a device for removal of a solid phase (char) from the processed raw materials, placed at the bottom of the reactor, a device for obtaining the required amount of gaseous heat carrier at a temperature range of 500-1000°C, connected to the top of the pyrolysis reactor, as well as a purification device to extract solid particles from the vapor gases obtained in the pyrolysis reactor, and a device for separating vapor gas into its components. In the invented process, the device for producing gaseous heat carrier of the required amount at a temperature range of 500 -1000°C comprises a vortex gasifier, equipped with a collector for supplying air into the gasifier cavity through swirlers by a blower through an air duct. The use of vortex technology in gasifier helps reduce the amounts of low-melting fusible materials accumulating in the system thus increasing the efficiency of the process and overcoming the drawbacks of prior arts.

Inside the pyrolysis reactor there are shelves made of mesh material, placed obliquely, with the incline downward from the reactor walls to its center. The upper part of the reactor, with respect to its other parts, has a larger cross-section. The device for char discharge from the reactor is designed as a screw conveyor, along which heat absorption plates are located. The screw conveyor and the plates are placed into casing, the cavity of which is embedded into the air duct connecting the blower to the gasifier collector. At the same time, the device for separating vapor gas obtained in the reactor from the solid phase is placed between the reactor and the device for separating vapor gas into its components, and is designed as a solid-liquid/gas separator.

Summarizing mentioned above, the invention is a duplex process for rapid conversion of carbonaceous raw materials, comprising several units. The first unit includes a vortex gasifier, which produces reducing, hot generator gas, used as a heat carrier and supplied to the second unit, which includes a reactor where fast pyrolysis of raw materials is conducted with high productivity due to direct efficient heat exchange in the countercurrent of heat carrier and raw material, resulting in the production of high quality energy carriers, such as fuels. The process also comprises purification, separation and air supply units.

In the drawings:

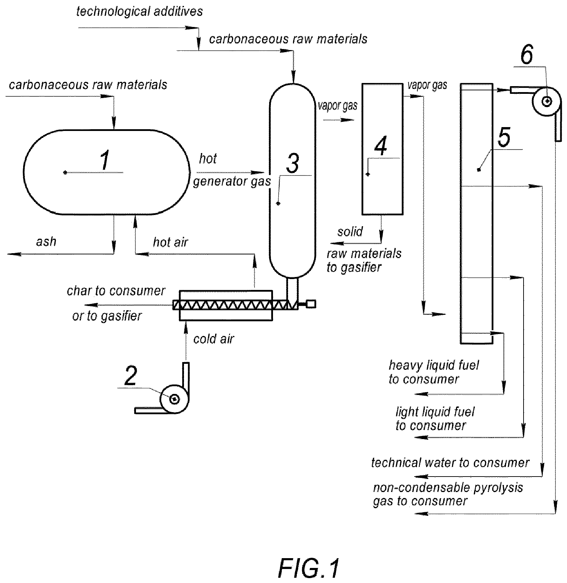

- FIG. 1: shows the principle scheme of all thermochemical processing units.
- FIG. 2: shows the scheme of the unit used for preparation of gaseous heat carrier.
- FIG. 3: shows the scheme of the pyrolysis unit.

The process of thermochemical conversion of carbonaceous raw material comprises the following main units: preparation of gaseous heat carrier unit, pyrolysis unit for raw materials, purification of vapor gas unit for vapor gas obtained as the result of raw material processing, and unit for separation of vapor gas into components. All these units are connected by conveying means, such as pipelines, conveyors, and others.

The gaseous heat carrier preparation unit includes a vortex gasifier (1) with raw material loading and ash dispensing devices and connected to it - through an air duct - air blower (2) to feed preheated to 100-350°C air into the cavity of the gasifier. The heat carrier at a temperature range of 500-1000°C is generated in the amount required for the pyrolysis process, which is conducted at a temperatures range of 500-800°C, depending on the raw material properties and the desired content of obtained liquid and solid energy carriers.

The pyrolysis unit comprises a reactor (3) with inputs for receiving gaseous heat carrier (hot generator gas) from the gasifier (1), carbonaceous raw materials and technological additives and outputs for releasing char and vapor gas. The residence time of raw materials in the conversion zone varies from one to 15 seconds, depending on raw material properties and particle sizes.

The vapor gas purification unit includes a purification device (4) to remove solid particles from the vapor gas.

The vapor gas separation unit includes an apparatus (5) for separation of purified vapor gas into a number of fractions. The apparatus may be a distillation column, separating vapor gas in such components as two fractions of liquid fuel, water and non-condensable pyrolysis gas removed from the apparatus through an exhauster (6).

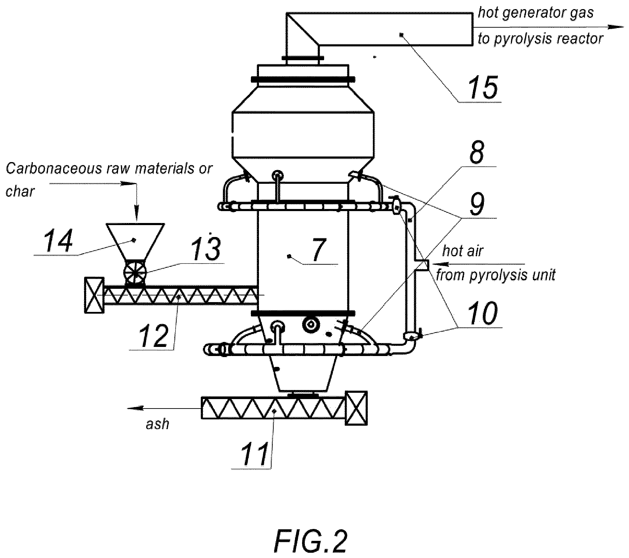

The vortex gasifier (1) (FIG. 2) has its reactor body (7) mounted on the body of hot air pipe collector (8) with distribution pipes (9), connected to the swirlers in the upper and lower zones of the working chamber of the gasifier. The collector contains control valves (10). In the bottom portion of the gasifier, there is a device (11) for discharging ash from the gasifier cavity (e.g. screw conveyer). Another device (12) (e.g. screw conveyer) is connected to the entrance of the gasifier and serves to supply carbonaceous raw materials from the sluice feeder (13) mounted on the raw material hopper (14).

The gas output (15) of the gasifier is located in the top part of the reactor body and provides an output for hot generator gas to be supplied to the pyrolysis reactor. The use of a vortex gasifier to produce heat carrier allows one to reduce the amount of ash coming along with generator gas to the reactor since the vortex process contributes to effective separation of gas and ash. In this process the ash is cast to the walls of the working chamber of the gasifier, and falls down to the hopper of the gasifier, while gas rises to the output pipe of the gas outlet (15) and then proceeds to the pyrolysis reactor (3).

Furthermore, the vortex gasification process takes place under regulated pressure, created by an air blower, and, therefore, the generator gas in the pyrolysis reactor produces the desired motion vector for all gases in the reactor (bottom-up) and certain resistance to the movement of raw material in the reactor (top-down), thereby increasing the residence time of raw material in the reaction zone and thus promoting more complete conversion of raw material. The generator gas (heat carrier) contains insignificant amount of acid gases, therefore, the heat carrier, supplied to the pyrolysis reactor, creates a reducing environment there, in which conversion reactions result in higher quality products, while the amount of harmful impurities in the obtained vapor gas is significantly reduced.

The generator gas obtained in gasifier may be used as an energy carrier instead of being directed to the pyrolysis reactor.

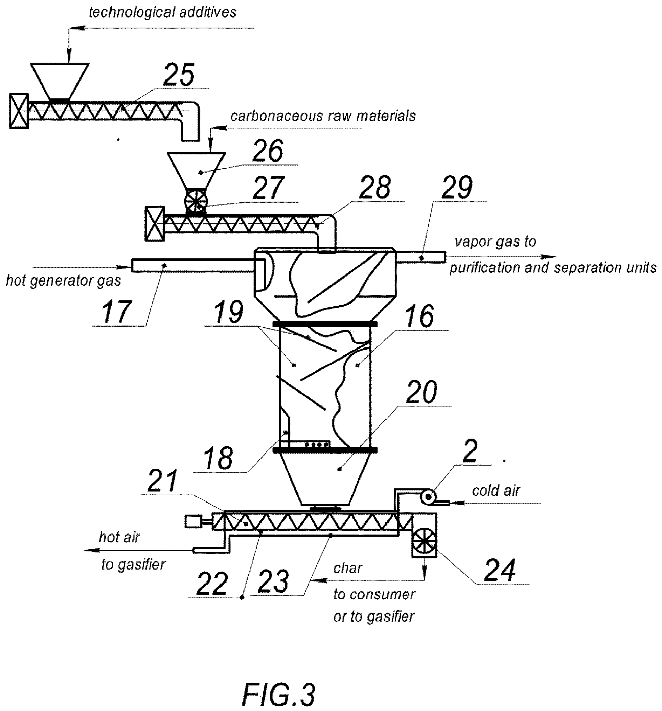

The pyrolysis unit (FIG. 3) comprises a thermochemical pyrolysis reactor with a vertical reactor body (16), containing an inlet (17) and a gas duct inside the reactor to feed the gaseous heat carrier - hot generator gas from gas output (15) of gasifier (1) - into the reactor through a distributor (18). The generator gas passes through the gas duct from the inlet (17) down to the distributor (18).

It is very important for the process efficiency that the upper part of the reactor has a larger cross section than the lower parts. This reduces velocity of vapor gas produced in the reactor travelling to the reactor outlet and thereby decreases removal of fine solid particles of raw material traveling with vapor gas out of the reactor.

Inside the reactor body (16) there are shelves (19) installed along its height made of slit mesh. Each of the shelves is inclined downwardly from the reactor wall, to which it is attached, to its center. The angle of inclination of the shelves is selected so as to ensure the movement (sliding) of raw materials on the shelf down under its own weight or with additional mesh vibration. The angle of inclination of shelves mainly depends on the type of raw material and is usually determined experimentally after a pilot plant operation. The dimensions and angles of the shelves are selected so as to ensure that the sliding raw material on the upper shelf reaches the initial point of the lower shelf, which is also inclined from the opposite wall of the reactor to its center. The number of such shelves in the reactor can vary from two to five depending on the height of the reactor body. The width of the shelf slits is selected based on the raw material particle size. The slit shelves allow one to adjust the residence time of raw material conversion in the reactor. The inclined mesh shelves and a part of the flue gas duct installed inside the pyrolysis reactor may be made of heat-resistant steel.

Water vapor may be supplied to the gasifier and/or pyrolysis reactor to help control the conversion process and temperature within the reactors. Parts of the gasifier and pyrolysis reactor casing are made of a steel shell that is lined with a sufficient thickness of the refractory material inside to withstand high temperatures, acids and abrasives.

The hopper (20) is connected to the lower part of reactor body (16) and is used to collect produced char.

A screw conveyor (21) is located under the hopper (20) to remove char. The heat absorbing plates (22) are located along the screw conveyor (21), while both the screw conveyor and the plates are enclosed by a casing (23). A sluice feeder (24) is mounted at the end of the screw conveyor (21) and serves to dispense char to consumers. The char can also be fed into the hopper (14) as raw material to obtain generator gas used as a heat carrier.

Inside the char discharging device there is an air duct connecting the air blower (2) to the collector (8) of the gasifier (1). During the process of char release, the blower (2) passes cold air in the air duct through the gap between the plates (22) and the casing (23), causing it to cool char, while simultaneously heating up to the temperature of 100-350°C. In the heated state the air is supplied from the char discharging device to collector (8) of gasifier (1), thus providing optimal conditions for gasifier operation.

The pyrolysis reactor is equipped with a device for loading carbonaceous raw material and technological additives. This device comprises a screw conveyor (25), located below the hopper for technological additives. The output of screw conveyor (25) is located above the hopper (26) for carbonaceous raw material (the feed hopper). The feed hopper (26) is connected to the feed inlet of the pyrolysis reactor through a sluice feeder (27) and a screw conveyor (28).

At the top of the reactor there is an outlet (29) to remove vapor gas. The outlet (29) is connected to the input of purification device (4) to remove solid particles from the vapor gas produced in the reactor. The device (4) has two outputs, one of which is designed to divert separated solids and is connected to the feed inlet of the gasifier (1). The second output of device (4) is connected to the input of apparatus (5) used to separate purified vapor gas into its components. The shield (30) prevents fine particles in raw material feed from falling into the stream of vapor gas exiting the reactor, when raw material is loaded into the reactor.

The process works as follows:
During the operation of the installation, the first thing in the process is the preparation of gaseous heat carrier. To do this, raw material is loaded to the working chamber of the vortex gasifier (1) by device (12) from the raw material hopper (14) through the sluice feeder (13). Typically, the gasifier (1) uses the same raw material as the reactor (3), but can also use char coming from the pyrolysis reactor. To produce the gaseous carrier, one has to use the vortex gasifier with predetermined performance to generate gas, used as a heat carrier, and produce this gas in desired amount, with certain required temperature.

The heat carrier - hot generator gas - produced in the gasifier (1) is fed to the inlet (17) through outlet (15) of the pyrolysis reactor (3). The generator gas is fed to the reactor cavity through a vertical gas duct and a distributor (18) and dispensed uniformly over the cross section of the reactor vessel.

At the same time, technological additives, necessary for the reactor operation, are supplied by a screw conveyor (25) to the feed hopper (26), where the carbonaceous raw material is also supplied. The raw material with the technological additives are then fed from the feed hopper (26) through the sluice feeder (27) and the screw conveyor (28) into the reactor for its thermochemical conversion. To increase the efficiency of raw material processing it is recommended that it is ground and dried before loading into the reactor. The technological additives usually consist of catalysts and substances such as lime, dolomite, and aluminosilicates preventing harmful emissions.

Entering the reactor, the raw material drops on the top shelf (19), and gradually, under its own weight, and possibly with the use of a vibration shelf, moves along the ledge, and slides from the upper shelf down to a lower slit shelf below it, slightly impeding the movement of the heat carrier from the bottom up to the outlet (29) of vapor gas from the reactor. Such movement of raw materials and the heat carrier loosens the raw materials, increases the heat carrier and the raw material heat transfer area, and provides the necessary residence time for raw material in the reaction zone, thereby ensuring completeness of thermochemical conversion of raw material and improvements to the quality of the obtained products, which is also, to a large extent, facilitated by the fact that the shelves are made of mesh material. The thermochemical conversion of the raw materials occurs in its countercurrent with the generator gas, which results in the formation of char and vapor gas. The vapor gas is discharged from the reactor through an outlet (29). The enlarged section of the upper part of the reactor reduces the vapor gas velocity in this part and, consequently, reduces the removal of fine raw material particles with the vapor gas. The char, obtained in the reactor, under its own weigh falls to the hopper (20), docked to the bottom of the reactor body (16).

From the hopper (20) hot char is transported by a screw conveyor (21), along which heat absorbing plates are located (22). Both, the screw conveyor and the plates, are enclosed inside the casing (23). After the screw conveyor the char is supplied to consumers, or to the hopper (14) of the gasifier, or to storage through a sluice feeder (24).

When hot char is released, cold air is passed by a blower (2) through the gap between the plates (22) and the casing (23), whereby it is heated by cooling char and is then fed into the collector in the heated state (8), and is supplied - through distribution pipes (9) - to the upper and/or lower (depending on the position of valves (10)) zones of the working chamber of the gasifier (1), providing optimal conditions for its operation and the required temperature of generator gas within the range of 600-1000°C.

After the processing of raw material, the resulting vapor gas enters the purification device (4) from the body of the pyrolysis reactor through the outlet (29). The solid particles, separated from the vapor gas in the purification device (4) are then fed into the feed hopper of gasifier (1). For the purpose of purification device, a standard inertial separator may be used.

The purified vapor gas, free of solid particles, enters apparatus (5) for its separation into components. A distillation column may be used for this purpose, separating the vapor gas into water, several (e.g. two) fractions of liquid fuel, and non-condensable pyrolysis gas removed by an exhauster (6). For the purpose of separation device (5) a wide range of equipment may be used. The selection of a relevant device is dictated by the type of raw material used and technological features of its processing, or by the need to obtain a specific range of products. In any case, the separation of vapor gas into its components is done using known equipment, which does not fall under patent protection.

Thus, using a distillation column for apparatus (5), the vapor gas may be separated into, for instance, non-condensable gas that can be used to generate heat and electricity, water, for technical purposes, a light fraction of liquid fuel, close in its properties to diesel fuel, which can be used for internal combustion engines or turbines, and a heavier fraction of liquid fuel, close in its properties to heating oil, which can be used in boiler furnaces. The char may be used as fuel, sorbent or carbonaceous reductant. The described installation, ensures continuous fast pyrolysis of raw material to produce high-quality and low-pollutant products. Experiments have shown that such pyrolysis may produce up to 60% of liquid fraction of the original weight of raw material, depending on its properties.

## Claims

1. A duplex process for the production of gaseous, liquid and solid energy carriers from carbonaceous raw materials in the form of a variety of wastes, including municipal solid wastes, comprising a pyrolysis reactor with a vertical shaft, means for loading raw materials and technological additives in the upper part of the reactor, means for removal of solid energy carrier in the lower part of the reactor, a device for vapor gas discharge at the top of the reactor, a device for producing gaseous heat carrier, connected by a gas duct with the reactor, a device for separation of vapor gas obtained in the reactor from solid particles, a device of separation of vapor gases into a liquid and gaseous phases different from the analogs by the facts that the device for obtaining necessary amount of the gaseous heat carrier with a gas temperature of 500-1000 ° C is a vortex gasifier equipped with feeders and ash removal devices in the form of screw conveyors, collectors for supplying air to the air swirlers in the cavity of the gasifier from the blower through an air passage; the heat carrier is supplied from the gasifier to the lower and middle parts of the shaft of pyrolysis reactor, where the process of raw material conversion takes place in the countercurrent of rising flow of heat carrier and descending raw materials due to direct heat exchange between the heat carrier and the raw material at a temperature of 400-800 °C for 1-15 seconds; inside the reactor shaft there are shelves installed along its height made of slit mesh, inclined downwardly from the reactor walls, to which they are attached, to its center; the angle of inclination of the shelves is selected so as to ensure the movement (sliding) of raw materials under their own weight from the lower edge of the upper shelf to the upper part of the lower shelf; the upper part of the pyrolysis reactor shaft has a larger cross section than the lower parts; the process alsocomprises a device for removal of solid energy carrier from the pyrolysis reactor in the form of screw conveyors.

2. The process of claim 1 wherein the body of the screw conveyor for removal of solid energy carrier from the pyrolysis reactor contains heat absorbing plates, attached to the conveyor body along the longitudinal axis of the screw conveyor, wherein, the screw conveyor and the plates are placed into casing, the cavity of which is embedded into the air duct connecting the air blower and the gasifier collector; this allows heating the air entering the gasifier.

3. The process of claim 1, wherein the raw material for the gasifier may be selected from the same carbonaceous feedstock that is fed to the pyrolysis reactor, or a solid energy carrier obtained in the pyrolysis process.

4. The process of claim 1, wherein the raw material used in the process is a liquid carbonaceous feed or a mixture of liquid and solid raw materials.

5. The process of claim 1, wherein water vapor is supplied to the gasifier with air, and water vapor may also be supplied to the pyrolysis reactor.

6. The process of claim 1, wherein technological additives are fed to the pyrolysis reactor together with raw materials to neutralize harmful substances formed during pyrolysis or catalysts to accelerate the pyrolysis of the raw materials and improve the quality of obtained products.

7. The process of claim 1, wherein a vertical partition is installed in the upper enlarged section of the pyrolysis reactor, separating the flow of raw materials fed into the reactor and the flow of the vapor gases leaving the reactor.

8. The process of claim 3, wherein the gas generated in the gasifier can be used as an energy carrier.

9. The process of claim 1, wherein the inclined shelves installed inside the pyrolysis reactor may be subjected to vibration.

10. A process of claim 8, wherein the gas produced in the gasifier, depending on the properties of the raw materials, the quantity and quality of the supplied oxidant, and the temperature contains such gases as CO, CO₂; H₂; CH₄; CnHm; N₂; (O₂ - no more than 0.5% by volume), thus maintaining reducing environment in the pyrolysis reactor, which helps produce less acidic harmful products, with higher quality than in the conversion of raw materials in an oxidizing environment.

11. The process of claim 1, wherein the control of the temperature of the heat carrier gas and the temperature in the pyrolysis reactor is carried out by controlling the flow of the oxidant supplied to the gasifier, controlling the quantity and quality of the raw material fed in the gasifier and the pyrolysis reactor, and by controlling the flow and the temperature of the steam fed into the gasifier and the pyrolysis reactor.

12. The process of claim 1, wherein the control of the downward flow rate of the raw material in the pyrolysis reactor is carried out by adjusting the inclination angle of the mesh shelves in the pyrolysis reactor, by changing the width of the slit in the grid of the shelves, and by turning the vibration of the shelves on and off.

13. The process of claim 1, wherein the parts of the gasifier and pyrolysis reactor casing are made of a steel shell that is lined with sufficient thickness of refractory material inside to withstand high temperatures, acids and abrasives.

14. The process of claim 1, wherein the inclined mesh shelves and a part of the flue gas duct installed inside the pyrolysis reactor are made of heat-resistant steel.

15. The process of claim 1, wherein the vortex gasifier and the pyrolysis reactor are made of several parts having flanges bolted through sealing gaskets with dimensions that are easy to manufacture, install, maintain and transport using standard equipment.

16. The process of claim 1, wherein products may be obtained with the use of vortex gasifier only, without further use of the pyrolysis reactor.
